# NEW EUROPEAN PATENT SPECIFICATION

(11) **EP 1 349 460 B2**
(45) Date of publication and mention of the opposition decision: **18.03.2015**
(45) Mention of the grant of the patent: 10.03.2010
(21) Application number: 01982612.2
(22) Date of filing: 13.11.2001
(51) Int. Cl.: A23G 3/20, A23G 1/00, A23G 3/00, A23L 3/00

(54) **EXPANDED CONFECTIONERY**
EXPANDIERTE SÜSSWAREN
CONFISERIES LEVEES

(30) Priority: 13.11.2000 GB 0027662
(43) Date of publication of application: 08.10.2003
(73) Proprietor: MARS UK LIMITED, Slough, Berkshire SL1 4LG (GB)
(72) Inventor: Goalby, Paul, Buckinghamshire SL8 5AB (GB); Everett, Caroline Frances, Enfield, Middlesex EN2 9JH (GB); Linegar, Paula Ann, Berkshire SL6 9LL (GB); Wehrle, Karina, Slough, Berkshire SL1 3LZ (GB)
(74) Representative: Care, Alison
(86) International application number: PCT/GB2001/005008
(87) International publication number: WO 2002/037979

(56) References cited:
- WO-A-92/02150
- WO-A-92/02150
- WO-A-95/04445
- WO-A-95/04445
- WO-A-97/34503
- FR-A- 1 477 820
- GB-A- 577 994
- GB-A- 191 215 120
- US-A- 1 391 918
- US-A- 1 434 667
- US-A- 1 851 988
- US-A- 2 402 999
- US-A- 3 325 295
- US-A- 3 325 295
- US-A- 3 615 593
- US-A- 3 779 772
- US-A- 3 798 337
- US-A- 3 835 226
- US-A- 4 104 405
- US-A- 4 104 411
- US-A- 4 486 369

## Description

### Background to the Invention

The present invention relates to expanded confectionery and to improved processes for making shaped pieces (articles) of confectionery as well as novel shapes thereof.

Cadburys WO97/34503 discloses a process for producing expanded confectionery, which discloses the use of an expanding agent (e. g. sodium bicarbonate) which is caused to expand by heating in an extruder so that the extruded product has already expanded as it emerges from the extruder. The use of an gas injection facility is also disclosed to produce or increase the expansion. The patent aims to avoid the use of a vacuum drying oven.

The use of bicarbonate restricts the flavours, which can be imparted to the product, tending to introduce a caramel flavour. The use of bicarbonate further restricts the moisture content of the initial ingredients since the moisture can affect the temperature at which the bicarbonate starts to decompose.

The process also requires a mechanical rounding or shaping stage between the extrusion of the expanded product and the drying thereof. This introduces extra capital cost and space requirements, which are disadvantageous.

The Cadburys process is also described only with reference to malted products possibly because the malt flavour is needed to mask the caramel flavour imparted by the bicarbonate expanding agent.

The present invention is not subject to such limitations since it does not-rely on an expanding agent or gas entrainment or the use of compressed or super-critical gas or of whipping of a pre-mix to achieve the expansion but rather utilises expansion of moisture present in the starting formulation. Also it does not require a separate shaping stage but rather achieves shaping during drying.

Furthermore it is not limited in scope to a predominantly milk or milk powder composition or to a predominantly malt flavour or caramelised flavour.

Thus the present invention can produce expanded products from a much wider range of starting materials and result in a wider range of product flavours and shapes. Materials broadly referred to as mixtures of sugars with ingredients we shall refer to as 'structuring materials' can be utilised. Typically the structuring materials will be proteinaceous, such as milk or casein powder, or consist of carbohydrates, such as gums or flour, possibly in combination with fats. The sugars may be present in the form of syrup.

The part of the final product composition comprising protein or carbohydrates may also be referred to as the matrix and thus the matrix may be a mixture of proteins, carbohydrates and fat and often may be a complex mixture.

Three broad categories of confectionery can be considered. The first category includes products of the type referred to in the above Cadbury's disclosure and typically contain milk powder as major structuring material but according to the Cadbury disclosure, possibly the structuring effect may also be augmented by the inclusion of malt or malted milk. These products contain e.g. 30 to 70% by weight of milk powder with or without malt flavour. In some of the Cadbury embodiments it appears that the requirement for malt or malted milk could restrict the range of strength of malt flavour in the finished product as well as restricting the nature of the flavour to a largely malt flavour. The products here described are often utilised as centres for further coating, e.g. with chocolate, using the conventional panning process or other suitable method.

By way of example the mixture for category 1 could be in the following proportions and preferred ranges.

| | | Preferred Range | Preferred Proportions |
|---|---|---|---|
| | | % by weight | |
| 1 | Milk powder | 12-40 | 25-38 |
| 2 | (Glucose syrup plus flavour) or (Malt extract) | 15-25 | 18-22 |
| 3 | Spray dried glucose syrup (zero water) | 40-60 | 45-55 |
| 4 | Sodium bicarbonate | 0-1 | 0.2-0.4 |
| 5 | Water from ingredient 2 | 2.7-4.5 | 3.2-4.0 |
| 6 | Additional water | 1.3-5.5 | 2.0-4.5 |

### Structuring materials for category 1 include milk powder.

The second category of product which may be referred to as sugar confectionery contains predominantly sugars or sugar syrup, comprising sucrose, dextrose, glucose syrup, fructose or mixtures thereof as well as various low calorie or reduced sweetness sugar or sugar alcohol alternatives or replacers, including maltitol, mannitol and lactose, as will be well known to those skilled in the art of sugar confectionery, together with a structuring material and flavouring. The structuring material may be a source of carbohydrate e.g. complex carbohydrate such as polysaccharides, especially branched chain polysaccharides, examples of which are starch and their breakdown products such as maltodextrin or gums or the structuring material may be a source of protein such as milk powder or gelatin. The flavouring may be a fruit, caramel or savoury flavouring. By way of example the mixture could be in the following proportions and preferred ranges:

| | Preferred Range | Preferred Proportions |
|---|---|---|
| | % by weight | |
| Sucrose | 60-80 | 65-75 |
| Other Sugars | 10-30 | 15-25 |
| Structuring material | 1-10 | 3-7 |
| Fat | 0-15 | 5-10 |
| Flavourings and colour | 0-5 | 0-5 |
| Water | 5-10 | 5-8 |

This class of confection is suitable optionally to be further processed by applying a coating, such as a sugar coating, using the conventional sugar panning process or other appropriate method. This coating can be coloured and/ or flavoured if desired and may be polished with a wax based composition or other polishing agent known to those skilled in the art.

The third category is characterised as a chocolate confection, especially but not limited to a milk chocolate confectionery. In order to produce the expanded embodiment, a reduced fat content is necessary compared with a standard, e.g. tablet or enrobed, chocolate but it nevertheless delivers a chocolate-like flavour in crisp, aerated form. Such compositions may contain protein preferably milk powder as structuring material, possibly augmented by other proteinaceous or carbohydrate sources, combined with sugar or sugars, as well as a limited amount of cocoa butter, milk fat or other fat, water and cocoa solids as flavouring and optionally other flavouring.

Preferred ranges and preferred proportions in % by weight are set out as follows:

| | Preferred Range | Preferred Proportions |
|---|---|---|
| | % by weight | |
| Protein e.g. milk solids | 10 - 40 | 15 - 25 |
| Sugar | 40-70 | 45 - 60 |
| Water | 6-15 | 9-12 |
| Cocoa constituents | 5-40 | 15 - 25 |
| Fat | 0-25 | 10 - 15 |

The structuring materials can be any milk derived ingredients including full cream milk powder, skimmed milk powder, whey, buttermilk powder, and mixtures thereof Alternative or supplementary protein sources such as gelatin, gluten or egg white could be included. Malt extract or caramel could be added as additional flavouring if desired.

The sugar is preferably sucrose but this can be partly replaced by other sweeteners including lactose, glucose and fructose.

The cocoa constituents are mainly cocoa liquor or cocoa powder and cocoa butter and mixtures thereof.

The fat may be provided by cocoa butter, vegetable fats or milk solids.

The category 1 formulations may contain a very small amount of very finely powdered sodium bicarbonate. This is not required for expanding the products but has the effect of providing initiation sites for water vaporisation. Its purpose is to increase the uniformity of expansion during the moisture driven expansion process and results in a more even pore or bubble size.

Whilst the formulation need not contain any bicarbonate, it may contain about 0.05 to 0.70% e.g. 0.1 to 0.45% by weight rather than the 0.5 to 2% preferably 1% by weight used in the Cadbury process.

The formulations of the present invention rely on the moisture content to produce the expansion and typically contain in excess of 4% or 5% or more water e.g. 7% rather than approaching zero % water in Example 1 of Cadbury's disclosure, or (1.3/51.3) x 100 water i. e. 2.5% in Example 2 of Cadbury's disclosure. This example 2 also injects carbon dioxide prior to the mass exiting from the extruder. The formulations of the present invention do not rely on gas injection or gas entrainment before or during the extrusion.

In the present invention the bicarbonate preferably has a particle size such that all pass through a 100 micron mesh sieve. For ease of handling the powder preferably is of large enough particle size so that it can all be collected on a 5 micron mesh sieve. Examples of bicarbonate are sodium, potassium and ammonium bicarbonate.

The presence of temperature sensitive components within the matrix, such as milk proteins, in these formulations presents problems in that if high temperatures are used this introduces the risk that the proteins may become cooked i. e. denatured and loose their desirable confectionery characteristics. Secondly, in order to achieve high throughput one wants to achieve drying as fast as possible. To do this at low temperature forces one to use vacuum ovens, which, Cadburys have said, are undesirable for capacity reasons.

WO92/02150 discloses an apparatus for the rapid heat treatment of products, in particular bread dough. The dough is subjected to heat treatment in an enclosed zone by dielectric and radiant heating.

The present inventors have spent several years studying the factors involved in achieving rapid drying whilst not denaturing components of the matrix such as the proteins, if present. The invention has been brought to completion as a result of these studies. They have found that if one carries out the drying on a permeable or contoured surface support means the shaping of the articles can occur during the drying stage without the need for a mechanical shaping step.

They have found that by introducing an air bleed to the vacuum ovens drying can be achieved at a higher rate by reducing the build up of water vapour in the oven without lowering. the drying temperature too much.

If one uses these two features in combination excellent shaping and throughput are both achieved. Indeed the air bleed helps in even evaporation from the articles and thus even shaping. The permeable or contoured surface support means enhances the moisture removal from the surface of the product, by affording access to the articles over substantially their whole surface area.

The permeable support means is preferably a permeable mesh or a solid belt with a contoured surface or a textured relief imitating a mesh. The mesh opening size is preferably 2mm across the maximum width of the aperture, e.g. 0.5 to 3mm or 1.5 - 2.5mm across. The mesh shapes may be such as to afford square holes. The support means may be a grid in a batch oven or a conveyor belt in a continuous oven. The permeable support means may be a perforated sheet or a woven fabric of textile or wire.

In general the ratio of solid/open area of the belt needs to be such that on the one hand the belt is strong enough and on the other hand open enough to allow the desired expansion. Thus more broadly the solid/open area ratio is in the range 30/70 to 70/30, preferably 40/60 to 60/40 e.g. 45/55 to 55/45 especially about 50/50.

For ease of reference the permeable or contoured surface support means will be referred to as the permeable conveyor hereafter.

The new process enables spherical and non-spherical shapes with rounded edges to be made.

The Cadbury disclosure mentions at page 1 that "confectionery shapes such as balls and bars" can be made but then only describes making spherical shapes from extruded cut cubes, which have to be vibrated to produce "approximately spherical pieces" (p 6 117). In the Cadburys process expansion occurs in the extruder or as the material emerges from the extruder i.e. before the cutting and drying stages (see p 41 7). This means that expansion during the drying stage cannot occur to any significant extent and the shape of the pieces (if they are not vibrated) will be essentially as extruded.

### Summary of the Invention

Accordingly the present invention provides rounded non spherical expanded bar shaped confectionery articles produced by the process of the invention having a longitudinal axis and maximum transverse major and minor dimensions, L1 and L2, the ends and edge of the bar shaped articles being rounded so that their radius of curvature is in the range 0.25 L2 to 0.5 L2.

The dimensions L1 and L2 may be of substantially uniform values along the rounded bar up to the rounded ends so that the cross section of the bar remains the same along its length. In another embodiment the values of L1 and L2 may get smaller as one gets nearer the ends of the bar.

The values of L1 and L2 may be the same or similar in which case a cylindrical shape with rounded ends or an oblate spheroid or a shape merely with tapering ends will be produced.

If L1 and L2 are significantly different a rounded edged slab like shape will be produced.

The confectionery bars can be made from each of the first, second and third product categories described above.

The invention also extends to spherical expanded confectionery articles which are of chocolate or sugar flavour and may be made from the second or third product categories described above.

All the products of the invention can be enrobed or coated with confectionery coatings e.g. of chocolate, candy or fondant.

The invention also extends to spherical or near spherical expanded confectionery products produced by a process of the invention made from predominantly sugars or sugar or sugar alcohol alternatives or replacer together with a minor proportion of a structuring material. Such confectionery products are made from a formulation in which the sugar or sugar alcohol replacer is present in an amount of 60 to 90 % and the structuring material is present in an amount of 1 to 10% by weight, there being present up to 15% by weight of fats, up to 5% by weight of flavourings (e.g. fruit or savoury flavours) and colour and up to 10% by weight of water.

The invention also extends to spherical or near spherical expanded chocolate confectionery products produced by a process of the invention made from sugar, protein and cocoa constituents.

Such a chocolate confectionery product may be made from a formulation in which the sugar is present in an amount of 40 to 70% by weight, the protein is present in an amount of 10 to 40% by weight, the cocoa constituents are present in an amount of 5 to 40% by weight, water is present in an amount of 6 to 15% by weight and fat is present in an amount up to 25% by weight.

According to the process aspects of the invention as set out in claim 1, an expandable confectionery formulation containing water in an amount sufficient to expand the formulation on heating under vacuum is formed into small pieces and placed on permeable support means as a loose single monolayer in a vacuum oven and heated and exposed to reduced pressure, the heating being at a temperature below that which causes denaturing of the formulation and for a time such that the formulation expands evenly to rounded bar-like shape or spherical shape. The formulation is preferably of category 1, 2 or 3 as described herein or as specified in claim 8 or claim 10.

The pieces are preferably heated before being exposed to the vacuum and are then also heated whilst exposed to the vacuum. According to preferred process aspects of the present invention there is provided a process in which a confectionery formulation containing water in an amount sufficient to expand the formulation on heating under vacuum is formed into pieces e. g. extruded and cut into small pieces e. g. of square, rectangular or cylindrical form, and supplied e. g. conveyed directly, without vibratory shaping, to permeable conveyor means in a continuous vacuum oven and conveyed there through on said permeable conveyor means via airlock outlet means and where necessary via airlock inlet means whilst being heated at reduced pressure and a temperature below that which causes denaturing of the formulation so that the formulation expands. In a preferred embodiment air or an alternative gas is bled into the vacuum oven in addition to any air entering the, oven via the airlock inlet means and the airlock outlet means.

The air or gas bleed rate may be greater than the rate of the inevitable ingress of air into the oven via the conveyor inlet to the oven. Any suitable gas could be used as an alternative to air, providing it conformed to food safety requirements, does not impart an unwanted flavour or other residue and is not saturated with water vapour.

It will be appreciated the amount of additional air or gas bleed required will depend on the relationship between the volume of air which inevitably enters the oven through the inlet and outlet and the total internal volume of the oven. When this relationship is small (i.e. a large oven) a larger volume of additional air or gas bleed will be required.

Typical ingress rates to a continuous vacuum oven may be as much as 85 L air/m³ of oven volume /min. The air or gas bleed is preferably 10 to 1000 or 50 to 500 e.g. 30 to 100 L air/m³ of oven volume/min.

The formulation may be extruded as a sheet or slab e.g. 0.5 to 2 e.g. 1 to 1.5cms thick and then slit into square or rectangular cross section elongated pieces, also called ropes, and then the ropes cut into square or rectangular lengths whereby cubes or rectangular bars are produced. The conveyor is driven through the oven at a rate such as to give the desired residence time sufficient to achieve expansion and drying. Cubic pieces expand to substantially spherical shape and rectangular bars to rounded bar shapes as discussed above.

The precise residence time will depend on the temperature and vacuum used and the rate of air bleed and the precise formulation.

The oven temperature will typically be in the range 20 to 200 e.g. 80 to 120°C before the air or gas bleed is turned on. The oven pressure will typically be 20 to 200 mm Hg e.g. 35 to 60 mm Hg before the air or gas bleed is switched on. The air bleed will typically be in the range 20 to 500 e.g. 50 to 500 preferably 75 to 250 or more preferably 80 to 150L of air/m³ of oven volume/minute, these volumes being at normal atmospheric temperature (25°C) and pressure. The air or gas may be heated. As mentioned above the air or gas bleed sweeps water vapour out of the oven and prevents a saturated condition being set up, this facilitates and speeds up the expansion and drying process. If a solid support means e.g. conveyor belt is used which is not permeable then the base of the piece will tend to remain flat and only the parts of the piece which are remote from the support actually undergo expansion.

If a permeable support e.g. a mesh conveyor is used even and rapid expansion occurs, the need for a separate vibrating shaping process is avoided and increased throughput is achieved.

The purpose of the mesh material is to minimise contact area between the product and the conveyor, thus maximising moisture diffusion from the product. The nature of the mesh belt may be a flat belt with perforations, a weave of strands or a solid belt with raised relief to raise the product from the flat surface. The size of the mesh is defined by the geometry and plasticity of the product, i. e. the product should have minimal contact with the belt material, sufficient only to support the product and prevent it from deforming beyond that deformation determined by the expansion process. The mesh material can be a polymer or metal, but preferably a non-stick material such as PFTE, is used. Such a polymer need only be provided on the surface of the conveyor.

The conveyor can be a woven mesh or a perforated sheet or solid sheet having protuberances standing up from its surface of a size and separation such as to hold the cut pieces away for the mass of the conveyor and ensure ready and rapid egress of water from the mass being dried. A PTFE coated woven metal conveyor is a convenient form of the conveyor for use in the process of the present invention.

As regards the process, when the vacuum oven inlet temperature is low cubic pieces will remain generally cubic but will have rounded edges. Square section rectangular tablet shaped pieces will remain generally of square section rectangular form but will have rounded edges.

The products will be expanded but to lesser extent than at high temperatures.

The process can also be used to make expanded products from the other 2 classes of confection mentioned above.

According to our findings the low temperature processing which benefits the predominantly milk-containing formulations (Category 1) is also beneficial in the manufacture of the other 2 types. In the case of the second type (Category 2) in which the structuring material may be a carbohydrate, the lower vacuum oven temperature enables the controlled expansion of the matrix by virtue of the higher retained viscosity. In the case of the chocolate flavour (Category 3) an excessive degree of caramelisation or burning or of hardening of the premixture is avoided.

### Brief Description of the drawings

The invention may be put into practice in various ways and a number of specific embodiment of processes in accordance with the present invention for making an expanded confectionery products will be described. Three specific embodiments of apparatus for carrying out the process will also be described to illustrate the invention with reference to the accompanying drawings in which:
Figure 1 is a schematic diagram of a continuous process and apparatus,
Figure 2 is a diagrammatic side elevation of the so-called pip forming process in which individual pieces of the expandable chocolate formulation are made from the raw materials,
Figure 3A is a diagrammatic side elevation of an oven portion of the process and apparatus in which the individual pieces or pips are heated to expand them to the finished size and shape for subsequent enrobement in a chocolate coating,
Figure 3B is a partial scrap side elevation sectional view of the arrangement of Figure 3A with the middle parts of the conveyor runs and heating platens removed to show the air or gas bleed array,
Figure 4 is a view similar to Figure 3A of a simplified form of the oven shown in Figure 3A, and
Figure 5 is an end elevation from the inlet end of the arrangement shown in Figure 4.

### Description of preferred embodiments

Example 1 describes a batch process for making an expanded confectionery product of category 1 and Example 2 describes the same process as applied to category 2. Example 3 describes a continuous process as applied to category 3. Examples 4 to 20 describe a continuous process applied to category 1.

### Comparative Example 1

This is an example of a batch process for producing confectionery products made from a formulation of category 1 described above.

The specific formulation used is as follows:

| Ingredient | % by weight |
|---|---|
| Skim milk powder | 30.0 |
| Malt extract | 20.0 |
| Spray dried glucose | 50.0 |
| (Water from malt extract) | 3.6 |
| (Water from skim milk powder) | 0.45 |

Small nearly round pips are made up which are about 7 to 8mms in diameter and are slightly flattened. These are heated and exposed to vacuum in a vacuum oven having an internal cubic shape of dimensions 50cms x 50cms by 50cms.

An array of 20 x 30 pips are supported on a wire mesh grid having mesh openings of 5 to 6mms as a loose monolayer in which none of the pips touch each other.

The electrically heated oven is preheated to 100°C. The pips on the grid are heated at 100°C for 6 minutes at atmospheric pressure. A vacuum of 1-2 millibars is then drawn down and heating continued at 100°C for a further 20 minutes. The pips expand to spherical form 15 to 16mm diameter.

### Comparative Example 2

Example 1 is repeated using a formulation of category 2 described above. The specific formulation used is as follows:

| Ingredient | % by weight |
|---|---|
| Sucrose | 69.0 |
| Glucose syrup | 20.0 |
| Modified starch | 4.0 |
| Hydrogenated vegetable fat | 5.0 |
| Strawberry flavour emulsion | 0.6 |
| (Water from glucose syrup) | 3.6 |
| added water | 1.4 |

The same oven is used and the same process except that the preheating at atmospheric pressure is for 2 minutes and the vacuum heating is for 15 minutes.

### Example 3

This is a continuous process applied to category 3.

The raw materials for the process are mixed in the proportions given in Table 1 below.

**Table 1**

| Ingredient | Parts by % weight |
|---|---|
| Milk powder | 24 |
| Sugar (Sucrose) | 56 |
| Water | 7 |
| Cocoa liquor | 13 |
| Ethyl vanillin | trace |

The end product is an expanded chocolate ball containing all the solid ingredients from Table 1 but with a reduced water content of up to approximately 3% by weight. The chocolate ball has a volume of 1.9 to 2.0 cm³ and has small voids distributed evenly through it produced by evaporation of a proportion of the initial water content.

The chocolate ball was subsequently coated with a layer of chocolate by a conventional panning process using liquid chocolate and cooling air,

The apparatus used to carry out the process will now be described with reference to the accompanying schematic and diagrammatic drawings.

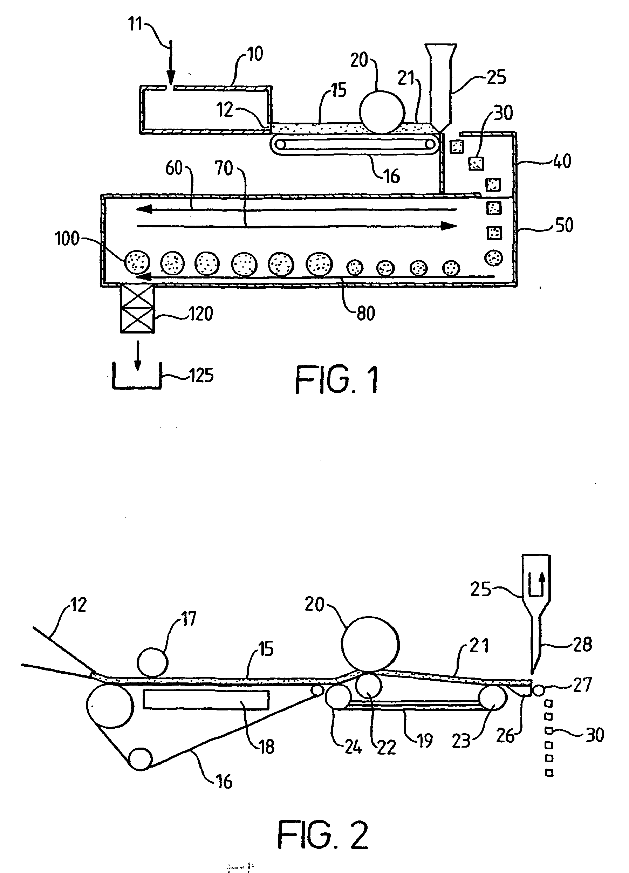

Referring first to Figure 1 this has a Werner & Pfliederer mixer extruder 10 to which the ingredients are added via an input pipe 11.

The raw materials are mixed and extruded from the extruder 10 via an outlet die 12 as a slab 15 of dough onto a non-stick cooling conveyor belt 16 at a temperature of 80 to 100°C.

The slab 15 is slit by high speed circular slitting blades 20 into ropes 21 and those ropes 21 are cut into small cubic or rectangular pieces or pips 30 of uniform size and weight by an ultrasonic guillotine 25.

The pips 30 fall under gravity though an airlock inlet arrangement 40 into an oven 50 through which they are conveyed back and forth by to and fro conveyor belts 60, 70 and 80. As the pips pass through the oven they are heated and moisture is driven off from them and they expand to become the finished expanded balls 100 and are dried to a moisture content of 3%. These finished expanded balls 100 fall under gravity through an airlock outlet arrangement 120 to the next stage of the process (not shown) or to a collecting container 125. The next stage of the process may be enrobing of the expanded balls in a chocolate coating.

Referring now to Figure 2 the pip forming process will be described in more detail.

Figure 2 shows the outlet 12 from the extruder feeding the slab 15 onto a cooling conveyor 16 under a sizing roller 17 which rotates at the same speed as the conveyor 16.

The conveyor 16 has a non-stick upper surface e.g. coated with PTFE. The slab is transported over a cooling platen 18 located below the upper run of the conveyor 16, and onto an array of diverter belts 19.

The length of the cooling conveyor 16 is kept as short as possible, being only so long as is needed to cool the dough sufficiently for it to release from the belt. A uniform conveyor speed is needed to ensure uniform pip weight and thus belt slippage is to be avoided.

The belt 16 is typically 44cms wide, the coolant temperature is typically 5-20°C and the belt speed is typically 1-4 metres/min.

The slab is slit by circular slitter blades 20 rotating at high speed in the same direction of movement as the slab of dough. The slitter blades are juxtaposed to a backing roller 22 which extends between individual diverter belts opposite each of the blades 20. The diverter belts are mounted on three rollers 22, 23 and 24, all like the roller 22.

The diverter belts 19 travel faster than the cooling conveyor 16 e.g. about 20% faster.

The blades 20 are stainless steel and cut between individual diverter belts 19 into the roller 22 which is made of PTFE. The blades rotate at high speed with an angular velocity many times higher than, e.g. 10, 20, 30 or 40 times higher than, the linear speed of the conveyor belt in the same direction as the dough to avoid adhesion of the dough to the blades.

About 25 to 60 ropes are prepared depending on the slab dimensions.

The slitter blades are 2mm thick and at least 10cms in diameter.

The blade inclusive angle is 20-30°.

The rope width is 0.74 to 0.8cms.
Downstream of the roller 23 there is a separator blade or anvil 26 and a driven roller 27 with which the blade 28 of the ultrasonic guillotine 25 co-operates so as to sever the ropes 21 into individual cuboid pips 30, which are shown falling under gravity to the expansion stage of the process.

The ultrasonic guillotine 25 has a blade of a width of 27 to 54cms and operates at an ultrasound frequency of 20 Kilohertz (kHz) and a cut rate of 315 to 355 cuts/min.

The blade 28 passes between the anvil 26 and the driven roller 27.

The slab is typically 0.6 to 0.75cms thick and 20-43cms wide. It is cut by the knives 20 into ropes 0.74 to 0.8cms wide. The ropes 21 are cut into cuboid pips having sides in the range 0.6 to 0.8cms long. The rope width is preferably the same as its thickness and the pips are preferably cubes.

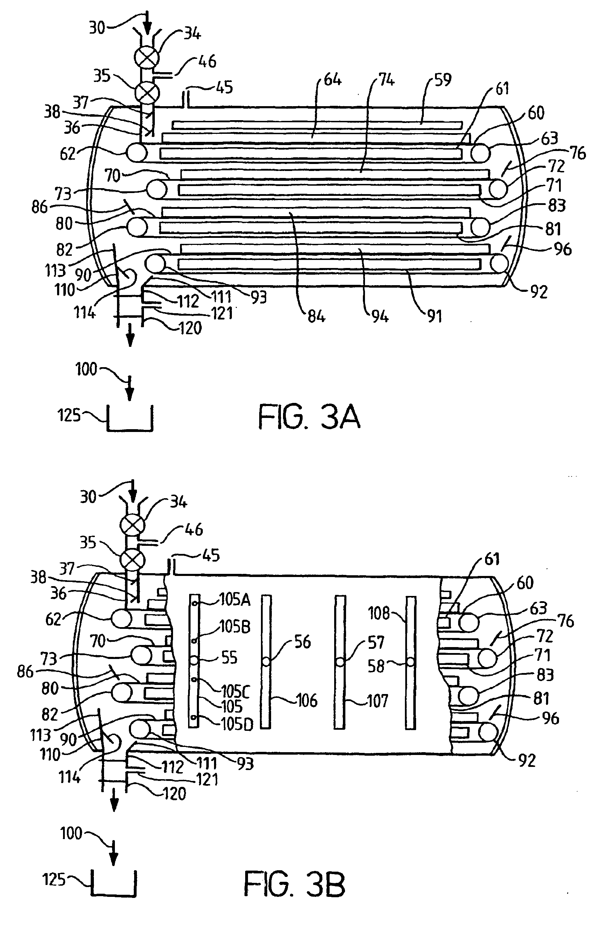

Referring now to Figure 3 the pips 30 fall under gravity into the airlock arrangement 40 and pass via two inlet rotary valves 34 and 35 into the interior of the oven 50. Here they fall onto the surface of the uppermost conveyor 60. All the conveyors 60, 70, 80 and 90 are made of woven glass fibre, the strands of the belt being of 2mms diameter, mesh opening 2mms. The belt is made of glass fibre and is coated with PTFE and allows the dough to be removed from it at temperatures in excess of 80°C

The oven 50 is a tubular stainless steel pressure vessel 10 metres in length and 1.5m in diameter with a hinged door at each end and is clad externally with heat insulating material. The oven has an internal volume of 70.65m³, the actual free volume being lower due to the presence of the conveyors and other components within the oven.

The oven 50 is provided with a vacuum system 44 (not shown) so that a vacuum can by drawn in it. This is achieved by a main vacuum line 45 located near the inlet arrangement 40 and an auxiliary vacuum line located between the inlet valve 34 and the inlet valve 35. The auxiliary line 46 is connected to the chamber 40 between the two rotary valves 34 and 35 to remove air entering with the pips 30. An auxiliary vacuum line 121 is also located in the airlock valve 120.

The vacuum system 44 has a vacuum pump and lines connected via appropriate valves to the main line 45 and auxiliary vacuum lines 46 and 121. The vacuum system should be of a power and capacity such that it can keep the oven at a pressure of 35 to 100 Torr whilst air is bled into the oven at a rate of up to 0.1m³/min (100L/min).

The main vacuum pump should be attached to the line 45 and auxiliary line 46 i.e. at the product in-feed end of the oven.

It will be noted that Figure 3 is arranged in the opposite sense to Figure 2 and has four conveyors rather than three.

The oven also has five temperature controllable heating platens 59 and 61 above and below the uppermost conveyor 60; platen 71 below the conveyor 70; platen 81 below the conveyor 80; and platen 91 below the conveyor 90. Accordingly there is a platen above and below each conveyor. Platen 59 is located 7cms above the top conveyor 60. Each platen can be heated to in the range 20-180° C.

Each conveyor runs around two end rollers 62, 63 for conveyor 60; 72, 73 for conveyor 70; 82, 83 for conveyor 80; and 92, 93 for conveyor 90. It will be noted that rollers 62, 72, 82 and 92 are at the inlet ends to the conveyors and rollers 63, 73, 83 and 93 at the outlet ends to the conveyors.

The outlet from the inlet valve 35 is a chute 36 of flange type which spreads the pips across the inlet end of the upper conveyor 60 at the inlet end 62 thereof. The outlet tube 36 has two sequential baffles 37 and 38 to help this spreading process.

The chute 36 is designed to reduce the velocity of the pip by the baffles 37 and 38 as they enter the vacuum band dryer and to prevent uncontrolled scattering of pips across the conveyor belt 60.

The walls of the chute 36 within the oven are provided with perforations 39 (not shown) to help dispersion and removal by the vacuum system, e.g. line 45, of air which is entrained with the pips as they enter the vacuum band dryer. The pips 30 are thus distributed evenly across the uppermost conveyor 60.

The pip temperature at this stage is in the range 55 to 80°C and the individual pip weight is 0.525grams.

Each conveyor has side product retaining guides 5cms high, 64, 65; 74, 75; 84, 85; 94, 95 only one of each pair being shown in Figure 3. The function of these guides is to prevent the pips falling off the edges of the conveyors and being lost or jamming the mechanism.

The pips are thus first conveyed along the conveyor 60 from the roller 62 to the roller 63 where they fall off the end onto the end 72 of the conveyor 70 which is offset to one end to help this. In addition an end baffle 76 is positioned above the roller 72 so as to catch pips falling over the end 63 of the conveyor 60.

The pips continue to be heated from above (platen 61) and below (platen 71) and are conveyed back to the outlet end 73 of the conveyor 70 where they fall off onto the input end 82 of the conveyor 80 which is offset in the opposite direction so as to facilitate this transfer procedure.

Again an end baffle 86 is positioned above the roller 82 so as to catch the pieces 30 falling over the end 73 of the conveyor 70.

In similar manner the pieces 30 are now conveyed back along the conveyor 80 and fall off the end 83 onto the conveyor 90 which again is offset and provided with a baffle 96.

The pieces now expanding or expanded are conveyed to the outlet end 93 of the conveyor 90 again heated from above and below by platens 81 and 91. At the outlet end 93 the fully expanded centres fall off the conveyor 90 into an outlet collector tube 110 which has a throat consisting of a baffle 111 extending from below the roller 93 to the neck 112 of the tube 110. Opposed to this baffle is an upstanding baffle 113 which extends out beyond the roller 82 towards the end of the oven and nearly up to the underside of the roller 82. This baffle 113 constitutes with the baffle 111 the tube 110. The baffle 113 also carries a downwardly directed baffle 114 which directs pieces falling on it towards the baffle 111.

The neck 112 of the outlet tube connects directly to a batch outlet air lock valve arrangement 120 which may be a pneumatically operated disc valve.

The inlet and outlet air valve locks enable a vacuum to be drawn down in the vacuum oven by means of the vacuum lines 45, 46 and 121. Controllable air bleed means allow air to be admitted into the oven so as to enable moisture driven from the pips by the heating to be swept away.

The air bleed means are closeable controllable individual ducts through the oven wall each duct having a individual valve so that flow though it can be varied or shut off entirely. Eight air-bleed ports (51 to 58) are provided four on each side of the oven. Each port consists of one 0.5" (1.27cm) BSP male fitting attached to the outside of the oven shell and one 0.5" (1.27cm) BSP male fitting attached to the inside of the oven shell. Air control valves 51A to 58A or blanks 51B to 58B are attached to the external fittings 51-58 as desired. Air distribution pipe work 101 to 108 is attached to the internal fittings 51 to 58. (The arrangement of the internal pipe work is shown in Figure3B which is on the same scale as Figure 3 A).

The pipes 101 to 108 (105, 106, 107, 108 being shown in Figure 3B) preferably each extend parallel to the side edges of the conveyor 60, 70, 80, 90. They preferably extend from below the conveyor 90 to above the conveyor 60. Each pipe preferably has one or more egress ports 101 A, B, C, D (not shown) for emission of air into the oven for each conveyor.

The ports 101A, B, C, D etc preferably face towards the conveyor. Preferably at least one egress port for each conveyor is located at the level of the said conveyor.

The ports 101 etc may all be of the same size or may be of different sizes, for example the port 105A, 106A, 107A, 108A being larger in the vicinity of the conveyor 60 (when the pips are most dense and have most water to lose) and the ports 105D, 106D, 107D, 108D being smaller in the vicinity of the conveyor 90 (when the pips are lightest). Some of the egress ports nearest to the outlet of the oven e.g. 105D and possibly 106D may even be blocked off.

The air or gas bleed array is preferably the same on each side of the conveyor stack.
This air or gas bleed, in conjunction with the nature of the conveyor belts enables the pips to be expanded merely by expansion of the water within the pips and moreover results in even expansion of the pips without the need for bicarbonate to generate the expansion. The air or gas bleed facilitates the drying process and helps sweep away the liberated water vapour.

The arrangement of four superposed conveyors offset length wise to give a staggered array so that pips are moved in a cascade down the series of conveyors merely under gravity provides a very compact and efficient heating process. Clearly more or less conveyors can be used depending on the time needed to remove the required amount of vapourisable material from the pips.

We will now describe a specific example of the process which is carried out making use of a simplified form of the apparatus described above.

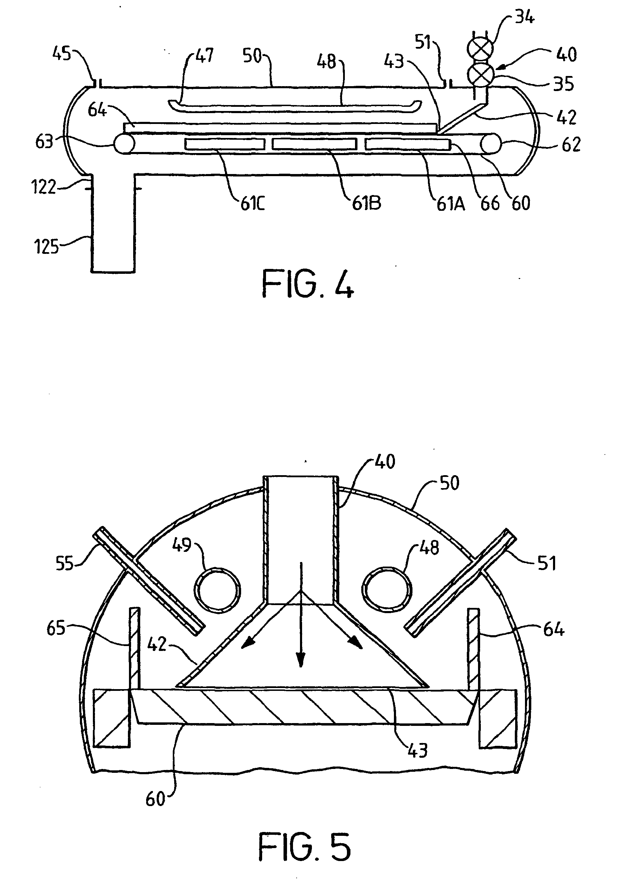

This apparatus is shown in Figures 4 and 5 and like reference numerals to those used in the previous figures are used for like parts.

The oven 50 has a single conveyor belt 60 fed with pips 30 from an inlet 40 and delivering the expanded workpieces to an outlet 122. The inlet 40 has two manual ball valves 34 and 35 which are 2" (5,08cm) manual ball valves. The outlet 122 is connected to a catch pot 125. The outlet 122 is not an airlock arrangement but the catch pot 125 is sealed to it.

The conveyor 60 runs around an inlet end roller 62 and an outlet end roller 63.

An inclined fishtail chute 42 deliver hot pips from the inlet 40 to the belt 60, preferably at a rate such that a mono layer of pips is formed. This has been found to give the best expansion from a cuboid pip to a spherical expanded workpiece.

The pips on the conveyor are heated from above by two steam tubes 48 and 49 instead of a platen 59 and from below the belt by three platens 61A, 61B and 61C.

The pips are held on the conveyor 60 by product retaining guides 64 and 65.

Two valved air or gas bleed ports 51 and 55 (only 51 is shown in Figure 4) are provided one on either side of the oven 50 near the inlet 40 (as shown in Figure 5).

A vacuum line 45 is provided at the outlet end of the oven and is attached to a vacuum system 44 (not shown) which can remove 2.4m³ of air/min from the oven.

The oven 3m long and has a diameter of 0.5 m and thus an internal volume of 0.59 m³, the actual free volume being lower due to the presence of the conveyors and other components within the oven.

The length of the conveyor on which pips are carried is 2.3m (namely the length from the bottom 43 of the chute 42 to the end of the roller 63). The length of the conveyor which is heated is 1.7m i.e. from the inlet end 66 of the first platen 61 to the outlet end 47 of the steam tubes 48, 49.

The width of the conveyor is 30cms.

The conveyor 60 is glass fibre mesh belt coated with PTFE and having 5mm square meshes.

### Examples 4 to 20

The composition used herein is the same as in Example 1 above.
The process using this apparatus is as follows.

Pips used in Examples 4 to 20 were made by the process known as drop rolling in the laboratory (atmosphere temperature 16°C, relative humidity 56%.)

Each pip weighed 0.5g and these laboratory drop-rolled pips were of flat rounded disc shape and oval cross section and about 7-8 mm in diameter. The moisture content of the pips was about 7.5% before the oven.

The pips for examples 16 and 17 were produced using a laboratory extruder to produce a slab of dough 1cm thick slit to 1cm width and cut to 1cm length. Each such cuboid pip has a volume of 1cm³ and weighs 1g. The pips had a moisture content of 8.4% before the oven.

The hot pips at varying measured temperatures (see Table 2 below) were then fed to the apparatus of Figures 5 and 6 at a rate such as to produce a mono layer of pips on the conveyor 60, e.g. 120g/min by feeding 40g of pips through the inlet 40 every 20 seconds. The pips were expanded to spheres with a diameter of 15-16 mms. This was the target result.

Table 2 gives the oven pressure, the residence time of the pips on the conveyor belt, the rate of feed, the pip temperature before entry to the oven and the moisture content of the expanded workpieces, and the temperature of the platens 61.

The air bleed was at the rate of approximately 100 litre /min.

**Table 2**

| Example | Platen (1) temperature °C | Pressure (Torr) | Res. time (min) | Feed (g/min) | Pip Temp (°C) | Moisture (%) |
|---|---|---|---|---|---|---|
| 4 | 130 all | 77 | 29 | 120 | 70 | - |
| 5 | 130 all | 85 | 29 | 120 | 70 | - |
| 6 | 130 all | 73 | 29 | 240 | 62 | 4 |
| 7 | 130 all | 73 | 10 | 240 | 64 | 4 |
| 8 | 130 all | 79 | 10 | 120 | 62 | 4.2 |
| 9 | 130 all | 71 | 03.45 | 120 | 63 | 4.8 |
| 10 | 130 all | 73 | 03.45 | 60 | 63 | 4.6 |
| 11 | 130 all | 57 | 03.45 | 60 | 63 | 4.6 |
| 12 | 130 all | 54 | 8 | 60 | 62 | 3.3 |
| 13 | 150, 140, 130 | 53 | 8 | 60 | 64 | 2.3 |
| 14 | 150, 140, 130 | 58 | 03.45 | 120 | 64 | 4.4 |
| 15 | 150 all | 52 | 8 | 60 | 61.5 | 1.9 |
| 16 | 130 all | 96 | 8 | 60 | 62 | 3.7 |
| 17 | 130 all | 40 | 8 | 60 | 62 | 2.1 |
| 18 | 130 all | 65 | 8 | 60 | 58 | 3.3 |
| 19 | 130 all | - | 8 | 60 | 58 | - |
| 20 | 130 all | 65 | 8 | 60 | 61 | 3.6 |

| | | | | | | |
|---|---|---|---|---|---|---|
| Notes (1) The platen temperatures for Examples 10 and 11 give inlet platen (61A) first, mid platen (61B) second and outlet platen (61 C) last. | | | | | | |

### Example 4

1.7 kg of pips were placed into a batch fluid bed heater and after 5 minutes had a temperature of 68-70°C and were fed at this temperature to the oven. A feed rate of 120 g/min was achieved by feeding 40g of pips through the valves every 20 seconds. This method was refined later to minimise the number of pips in the valve system at any time, thus preventing product sticking.

The pips were observed to be well spread across the conveyor belt.

Expansion of the pips was observed to occur before the pips left the fishtail chute. This was initially thought to be an issue and therefore oven pressure was increased for Example 5.

### Example 5

Pips were pre-heated to 70°C after 7 minutes and were fed into the oven as in Example 1. This example was aborted soon after it started due to a blockage in the manual 2" (5.08cm) ball valves. This was caused by over feeding the valves, however, it was decided to drop the inlet temperature of the pips to 65°C for future runs. A corresponding drop in oven pressure was also set for Example 6.

### Example 6

Cooler pips (62°C) flowed easily in the fluid bed and no problems were observed while feeding the pips through the manual 2" (5.08cm) ball valves. Pip feed rate was doubled to 240 g/min in order to achieve a deep bed of workpieces on the conveyor belt.

A bed depth of up to 3 workpieces was achieved with pips expanding on the fishtail chute. Moisture content was a little high at 4%, however, workpiece shape was very poor, with many flat surfaces and pinholes. It was clear that stacking workpieces during drying would not be possible in this oven.

### Example 7

Reducing the residence time by a factor of 3 to 10 minutes reduced the bed depth to a tightly packed mono-layer with a loosely packed second layer above. The quality of the expanded workpieces was still poor.

### Example 8

Pip feed rate was halved in an attempt to generate a mono-layer. A tightly packed mono-layer was generated however the quality of the expanded workpieces was still not good.

### Example 9

Residence time was reduced to 3 minutes 45 seconds (maximum belt speed). This resulted in a notably improved quality of the expanded workpieces, with very few flat surfaces.

### Example 10

Pip feed rate was halved to 60 g/min resulting in a loosely packed mono-layer of expanded workpieces on the mesh belt. The expanded workpieces looked very good before the vacuum chamber was repressurised, but they degenerated later and were unsatisfactory

### Example 11

The previous examples had shown that a loosely packed mono-layer was required and this had been achieved by minimising the residence time of the pips in the oven and by reducing the pip feed rate to 60 g/min. Pip feed rate and residence time had been established and oven pressure and heating platen temperature were varied to reduce the moisture content of the expanded workpieces.

Oven pressure was reduced to 57 Torr, however, the moisture content was not affected. It was thought that the impact of such a pressure drop would be to increase drying at the end of the residence time (enabling boiling of pip moisture to recommence). It was concluded that either the oven pressure was still too high or that the residence time was too short.

The quality of the expanded workpieces was observed to be good while they were on the conveyor belt, however, a large number of pinholes appeared on workpieces taken from the bottom of the catch-pot 125.

### Example 12

Residence time was increased to 8 minutes. The loosely-packed mono-layer appeared intact and moisture content of the expanded workpieces was reduced to 3.3% (the target was 3%).

A beaker was held under the bull-nose 63 on a small section of belt to collect the workpieces before they dropped into the catch-pot. When these workpieces were compared to those in the catch-pot there were clearly fewer pinholes. It was decided to remove the catch-pot for future examples and replace it with a flat blanking plate attached at the flange 122.

### Example 13

Until this example all 3 heating platens 61A, 61B, 61C had been set to 130°C. It was decided to assess the impact of heating rate on drying. The first platen (61A) was set to 150°C, the middle platen (61B) to 140°C and the outlet platen (61C) set to 130°C.

The expanded workpieces looked reasonable, however, some belt marks were noted. The moisture content was low at 2.3%.

### Example 14

At this point it was decided to attempt an increase in throughput since residence time had been moved away from its minimum value. Pip feed rate was doubled to 120 g/min and residence time was halved from 8 minutes.

Moisture content of the workpiece was determined to be higher than Example 10 at 4.4%, while the quality was not as good as the previous best achieved in Example 9, with some belt marks.

### Example 15

For this example all 3 heating platens were set to 150°C while residence time and pip feed rate were returned to the levels used in Example 9.

The increased heating platen temperature lead to centres sticking to the conveyor belt and some signs of burning. Moisture content was very low at 1.9%.

It was decided to reset all platen temperatures to 130°C.

### Example 16

At this time Example 9 had produced the best expanded workpieces at the lowest moisture, however, target moisture had not yet been achieved while maintaining product quality. It was decided to conduct two tests using the conditions from Example 9 but setting the oven pressure at 100 Torr in Example 16 and 40 Torr in Example 17.

At 100 Torr the pips still appeared to expand at the fishtail chute. The workpieces appeared to stick to the conveyor. Moisture content was higher than Example 9 at 3.7%.

### Example 17

Using an oven pressure of 40 Torr the quality of the expanded workpieces appeared to be good. Moisture content was lower than Example 12, below target at 2.1%.

The conditions used in this Example were considered to produce the best combination of quality and moisture content.

### Example 18

The remaining three examples were conducted using cuboid pips produced on the extruder as described above. All pips were made from the same dough, having a moisture content of 8.4%. This higher initial moisture meant that handling the pips would be more difficult and therefore, pip pre-heat temperature was reduced to 60°C.

Due to the higher initial pip moisture a higher oven pressure was used than that in Example 17.

The pips appeared to be very sticky in the fluid bed heater due to their untypically high moisture and the presence of some flash. The final expanded workpieces were spherical and of reasonable quality when considering the high moisture content of the pips. Final moisture content was 3.3%.

### Example 19

This example used cuboid pips with the same processing conditions as Example 18. The example was aborted due to a problem with the vacuum system. However, the cuboid pips were observed to expand to spheres on the mesh conveyor belt. The diameter of the spheres was 15-16mms.

### Example 20

Example 19 was repeated and showed that laboratory made cuboid pips did expand to form spherical workpieces with as good quality as achieved by the laboratory pip-rolled pips.

From these examples it was concluded that a PTFE coated glass fibre belt formed from a 5mm mesh allowed the pips to expand with no formation of flat bottoms. It is believed that this is due to a lower contact surface area between the pip and the belt and an improved moisture diffusion.

It was found that during the early stages of expanding and drying of the pips, any surface-to-surface contact lead to the formation of a flat surface. This meant that a loosely packed mono-layer of pips was necessary in order to achieve good quality.

The permeable support and the air bleed are believed to interact with each other in that the permeable support enables the air bled into the oven to circulate around almost all of the surface of each workpiece and this enhances the avoidance of flat regions on the workpieces, in addition to encouraging the development of a more even pore distribution.

The process of the present invention provides product advantages as well. Thus as regards category one compositions the compositions can be made free of bicarbonate. The spherical or rounded products also have a smooth glossy reflective surface rather than a matt surface. This provides the opportunity when a surface coating is applied for smooth coatings to be obtained with lower usage of the coating composition e.g. a chocolate coating composition. It also reduces any tendency for ingress of the coating into the interior of the spherical or rounded object. Thus a spherical or rounded workpiece made of a composition of Category 1 affords a glossy reflective surface. As regards Category 2 compositions the process enables round or rounded products to be made without the use of bicarbonates as expanding agents. Thus a spherical or rounded workpiece made of a composition of Category 2 or Category 3 is free of bicarbonate or bicarbonate residues. As regards each of these products the pores in the product are typically 0.1 to 2mms across preferably 0.1 to 1mms across, there being few pores above this range.

The rounded products preferably are as defined in claim 19.

The pieces which are subjected to expansion may be small e.g. up to 2cms across or may be larger e.g. having maximum dimensions of 5 to 15cms or more e.g. 5 to 10cms.

The pieces may be of regular geometric shape e.g. cubes or square or rectangular cross section bars or other geometric shapes.

The pieces also can be of irregular shape, and may be larger or of the same range of sizes.

Thus the pieces may be shaped in sheet or slab form as human or animal figures, e.g. gingerbread men, mammals, fishes, birds, reptiles or insects, as geometric shapes e.g. squares, rectangles, circles, ovals, rings, triangles, or pyramids or truncated pyramids; as clothing e.g. headgear or footwear; as vehicles e.g. railway engines, other engines, cars, lorries, motorcycles, scooters, as ships or boats; as air planes, or helicopters; as buildings; as non figurative shapes, as plants e.g. trees; as clouds as symbolic shapes, e.g. hearts, crescents, stars or crosses; and indeed any other shapes.

Thus the present invention also permits other novel products to be made.

There is a big market for biscuits which rather than being round or oval, square or rectangular, have more complex shapes. However these are cut from a sheet of dough and are essentially planar. After baking there may be some slight rounding of the edges which are remote from the support surface on which the article was baked but the face which contacts the support remains planar.

The present invention enables all shapes to expand and become significantly rounded both from the surface facing the support and from the surface remote from the support. The products of the invention thus have a 3 dimensional feature.

Accordingly the process may be applied to pieces which are planar. The pieces preferably have a ratio of maximum dimension in the plane of the piece to the thickness of the piece perpendicular to the said plane of 2:1 or more e.g. 2:1 to 20:1 or preferably 2:1 to 10:1 e.g. 3:1 to 9:1 or 4:1 to 8:1.

The pieces are preferably at least 0.5mms thick e.g. 1 to 20mms or 3 to 10mms, such as 5 to 10mms thick before they are expanded.

Preferably the expansion is such as to produce an increase in thickness of 50% or more e.g. 50% to 200% e.g. 75% to 150% when the thickness of the piece before expansion is compared with the thickest region of the expanded piece.

The pieces are preferably made separately but could be fed to the permeable support as linked pieces with small interconnecting pieces holding them apart as a monolayer. These pieces could be ruptured to separate the pieces into individual units after the expansion or after any post expansion stage such as enrobing.

Thus according to a broader aspect, the invention provides shaped expanded rounded confectionery articles having a first maximum dimension (which will be called the planar dimension) greater than a second maximum dimension (which will be called the thickness dimension), which lies perpendicular to the said planar dimension, the said thickness dimension extending on either side of the plane of greatest area (which plane will be called the maximum plane of the article) in which the said planar dimension lies, the said confectionery article being rounded on both faces of the said maximum plane of the article. Put more generally the invention provides planar articles with an interesting outline which are rounded on both major faces so as to give a three dimensional appearance.
Preferably the degree of rounding is the same or substantially the same on each face on opposite sides of the said maximum plane of the articles. These rounded confectionery products are made from compositions of category 3 set out above.

The air bleed means have the function of letting air into the oven so as to flush water vapour away from the workpieces. It is thus important that they be located in the oven at locations remote from the outlets from the oven to which the vacuum drawing means are attached. Thus the bleed air will only be useful if it flows past the workpieces before being drawn out of the oven. The precise location can be chosen to suit the specific oven and conveyor geometry which is used.

## Claims

1. A process in which an expandable confectionery formulation containing water in an amount sufficient to expand the formulation on heating under vacuum is formed into pieces and placed on permeable support means as a single monolayer in a continuous vacuum oven and heated and exposed to reduced pressure, the heating being at a temperature below that which causes denaturing of the formulation and for a time such that the formulation expands evenly to rounded or spherical shape.

2. A process as claimed in claim 1, in which the formulation is one of the following, a formulation as described herein as a predominantly milk-containing formulation, a sugar confectionary, a chocolate confectionary, a formulation as specified in claim 9 and a formulation as specified in claim 10.

3. A process as claimed in claim 1 or claim 2, in which air or gas is bled into the vacuum oven.

4. A process as claimed in claim 2 in which air or gas is bled into the vacuum oven in addition to any air entering the oven via the airlock inlet means and the airlock outlet means.

5. A process as claimed in claim 4 **characterised in that** the air or gas bleed rate is greater than the rate of the inevitable ingress of air into the oven via the airlock inlet and outlet to the oven.

6. Shaped expanded rounded confectionery articles produced by the process of any one of claims 1 to 5 having a first maximum dimension, which will be called the planar dimension, greater than a second maximum dimension, which will be called the thickness dimension which lies perpendicular to the said planar dimension, the said thickness dimension extending on either side of the plane of greatest area, which plane will be called the maximum plane of the article, in which the said planar dimension lies, the said confectionery article being rounded on both sides of the said maximum plane of the article, wherein the formulation is a chocolate confectionary.

7. Rounded non spherical expanded bar shaped confectionery articles produced by a process as claimed in any one of claims 1 to 5 having a longitudinal axis and maximum transverse major and minor dimensions, L1 and L2, the ends and edges of the bar shaped articles being rounded so that their radius of curvature is in the range 0.25 L2 to 0.5 L2, the dimensions L1 and L2 being of substantially the same different values right the way along the rounded bar up to the rounded ends so that the cross section of the bar remains the same along its length, or the values of L1 and L2 becoming smaller as one gets nearer the ends of the bar.

8. Spherical or near spherical or rounded expanded confectionery products produced by a process as claimed in any one of claims 1 to 5 which is made from a formulation in which the sugars or sugar or sugar alcohol replacer is present in an amount of 60 to 90% by weight and the structuring material is present in an amount of 1 to 10% by weight, there being present up to 15% by weight of fats, up to 5% by weight of flavourings e.g. fruit or savoury flavours and colour and up to 10% by weight of water.

9. Spherical or near spherical or rounded expanded chocolate confectionery products produced by a process as claimed in any of claims 1 to 5 and made from sugar, protein and cocoa constituents.

10. Chocolate confectionery products as claimed in claim 9 which are made from a formulation in which the sugar is present in an amount of 40 to 70% by weight, the protein is present in an amount of 10 to 40% by weight, the cocoa constituents are present in an amount of 5 to 40% by weight, water is present in an amount of 6 to 15% by weight and fat is present in an amount up to 25% by weight.

## Patentansprüche

1. Verfahren, in welchem eine expandierbare Konfektformulierung, welche Wasser in einer Menge enthält, welche ausreichend ist, die Formulierung bei Erhitzen unter Vakuum zu expandieren, in Stücke geformt und auf durchlässige Trägermittel als eine einzelne Monoschicht in einem kontinuierlichen Vakuumofen platziert und erhitzt und vermindertem Druck ausgesetzt wird, wobei das Erhitzen bei einer Temperatur durchgeführt wird, welche unter derjenigen ist, welche Denaturierung der Formulierung verursacht, und für so eine Zeit, dass die Formulierung gleichmäßig zu abgerundeter oder kugelähnlicher Form expandiert.

2. Verfahren nach Anspruch 1, in welchem die Formulierung eine der folgenden ist: eine Formulierung wie hierin beschrieben als eine überwiegend Milch enthaltende Formulierung, ein Zuckerkonfekt, ein Schokoladenkonfekt, eine Formulierung wie in Anspruch 9 spezifiziert und eine Formulierung wie in Anspruch 10 spezifiziert.

3. Verfahren nach Anspruch 1 oder Anspruch 2, wobei Luft oder Gas in den Vakuumofen eingeblasen wird.

4. Verfahren nach Anspruch 2, wobei Luft oder Gas zusätzlich zu jeglicher Luft, welche in den Ofen über die Luftschleuse-Einlassmittel und die Luftschleuse-Auslassmittel eintritt, in den Vakuumofen eingeblasen wird.

5. Verfahren nach Anspruch 4, **dadurch gekennzeichnet, dass** die Luft- oder Gas-Einblasrate größer ist als die Rate des unvermeidlichen Einströmens von Luft in den Ofen über den Luftschleusen-Einlass und -Auslass des Ofens.

6. Geformte, expandierte, abgerundete Konfektartikel, hergestellt durch das Verfahren nach einem der Ansprüche 1 bis 5, mit einer ersten maximalen Abmessung, welche die ebene Abmessung genannt werden wird, größer als eine zweite maximale Abmessung, welche die Dickenabmessung genannt werden wird, welche senkrecht zu der ebenen Abmessung liegt, wobei sich besagte Dickenabmessung auf beiden Seiten der Ebene der größten Fläche erstreckt, welche Ebene die maximale Ebene des Artikels genannt werden wird, in welcher die besagte ebene Abmessung liegt, wobei besagter Konfektartikel an beiden Seiten der besagten maximalen Ebene des Artikels gerundet ist, wobei die Formulierung ein Schokoladenkonfekt ist.

7. Abgerundete, nicht kugelähnliche, expandierte, stabförmige Konfektartikel, hergestellt durch ein Verfahren nach einem der Ansprüche 1 bis 5, mit einer Längsachse und maximalen querlaufenden größeren und kleineren Abmessungen, L1 und L2, wobei die Enden und Kanten der stabförmigen Artikel derartig abgerundet sind, dass ihr Krümmungsradius im Bereich von 0,25 L2 bis 0,5 L2 ist, wobei die Abmessungen L1 und L2 von im wesentlichen den gleichen verschiedenen Werten den Weg entlang des abgerundeten Stabs bis hin zu den abgerundeten Enden sind, so dass der Querschnitt des Stabs entlang seiner Länge gleichbleibt oder die Werte L1 und L2 kleiner werden, wenn man sich den Enden des Stabs nähert.

8. Kugelähnliche oder fast kugelähnliche oder abgerundete expandierte Konfektprodukte, hergestellt durch ein Verfahren nach einem der Ansprüche 1 bis 5, welche hergestellt sind aus einer Formulierung, in welcher die Zucker oder Zucker- oder Zuckeralkohol-Ersatzstoff in einer Menge von 60 bis 90 Gew.-% vorhanden ist und das strukturierende Material in einer Menge von 1 bis 10 Gew.-% vorhanden ist, wobei bis zu 15 Gew.-% Fette, bis zu 5 Gew.-% Geschmackstoffe, z.B. Fruchtgeschmacksstoffe oder pikante Geschmacksstoffe und Farbstoff und bis zu 10 Gew.-% Wasser vorhanden sind.

9. Kugelähnliche oder fast kugelähnliche oder abgerundete expandierte Schokoladenkonfektprodukte, hergestellt durch ein Verfahren nach einem der Ansprüche 1 bis 5 und hergestellt aus Zucker, Protein und Kakaobestandteilen.

10. Schokoladenkonfektprodukte nach Anspruch 9, welche aus einer Formulierung hergestellt sind, in welcher der Zucker in einer Menge von 40 bis 70 Gew.-% vorhanden ist, das Protein in einer Menge von 10 bis 40 Gew.-% vorhanden ist, die Kakaobestandteile in einer Menge von 5 bis 40 Gew.-% vorhanden sind, Wasser in einer Menge von 6 bis 15 Gew.-% vorhanden ist und Fett in einer Menge bis zu 25 Gew.-% vorhanden ist.

## Revendications

1. Procédé dans lequel une préparation de confiserie expansible contenant de l'eau en une quantité suffisante pour dilater la préparation lors d'un chauffage sous vide est mise sous forme de morceaux et placée sur un moyen de support perméable sous la forme d'une monocouche unique dans une étuve à vide et chauffée et exposée à une pression réduite, le chauffage étant réalisé à une température inférieure à celle provoquant la dénaturation de la préparation et pendant une durée permettant à la préparation de se dilater de manière uniforme pour donner une forme arrondie ou sphérique

2. Procédé selon la revendication 1, dans lequel la préparation est l'une des suivantes, une préparation telle que décrite dans ce document sous la forme d'une préparation contenant principalement du lait, une confiserie sucrée, une confiserie chocolatée, une préparation telle que définie dans la revendication 9 et une préparation telle que définie dans la revendication 10.

3. Procédé selon la revendication 1 ou la revendication 2, dans lequel une purge d'air ou de gaz est introduite dans l'étuve à vide.

4. Procédé selon la revendication 2, dans lequel une purge d'air ou de gaz est introduite dans l'étuve à vide en plus de l'air entrant dans l'étuve par l'intermédiaire du moyen d'entrée du sas à air et le moyen de sortie du sas à air.

5. Procédé selon la revendication 4, **caractérisé en ce que** le débit de la purge d'air ou de gaz est supérieur au débit d'entrée d'air inévitable dans l'étuve par l'entrée et la sortie du sas à air dans l'étuve.

6. Articles de confiserie de forme arrondie, dilatés produits par le procédé selon l'une quelconque des revendications 1 à 5 possédant une première dimension maximale, qui sera appelée la dimension planaire, supérieure à une seconde dimension maximale, qui sera appelée la dimension d'épaisseur, qui est perpendiculaire à ladite dimension planaire, ladite dimension d'épaisseur se prolongeant sur l'un et l'autre côté du plan de la plus grande zone, ledit plan étant appelé le plan maximal de l'article, dans laquelle ladite dimension planaire se trouve, ledit article de confiserie étant arrondi sur les deux côtés dudit plan maximal de l'article, dans lequel la formulation est une confiserie chocolatée.

7. Articles de confiserie ronds, non sphériques, dilatés et en forme de barre produits par un procédé selon l'une quelconque des revendications 1 à 5 possédant un axe longitudinal et des dimensions maximales transversales majeures et secondaires, L1 et L2, les extrémités et les bords des articles en forme de barre étant arrondis, de sorte que leur rayon de courbure se situe dans la plage allant de 0,25 L2 à 0,5 L2, les dimensions L1 et L2 étant sensiblement les même valeurs différentes tout droit le long de la barre arrondie jusqu'aux extrémités arrondies, de sorte que la section en coupe de la barre reste identique le long de sa longueur, ou les valeurs L1 et L2 deviennent plus petites plus on s'approche des extrémités de la barre.

8. Produits de confiserie dilatés, sphériques ou pratiquement sphériques ou arrondis produits par un procédé selon l'une quelconque des revendications 1 à 5, qui est préparé à partir d'une préparation dans laquelle les sucres ou les produits de remplacement des sucres ou des alcools de sucre sont présents en une quantité de 60 à 90 % en poids et la matière de structure est présente en une quantité de 1 à 10 % en poids, avec jusqu'à 15 % en poids de matières grasses présents, jusqu'à 5 % en poids d'aromatisants présents, par exemple une saveur salée ou des saveurs de fruits, et une couleur présente, et jusqu'à 10 % en poids d'eau présents.

9. Produits chocolatés de confiserie dilatés, sphériques ou pratiquement sphériques ou arrondis produits par un procédé selon l'une quelconque des revendications 1 à 5 et préparés à partir de sucre, de protéines et de constituants de cacao.

10. Produits chocolatés de confiserie selon la revendication 9, qui sont préparés à partir d'une préparation dans laquelle le sucre est présent en une quantité de 40 à 70 % en poids, les protéines sont présentes en une quantité de 10 à 40 % en poids, les constituants de cacao sont présents en une quantité de 5 à 40 % en poids, l'eau est présente en une quantité de 6 à 15 % en poids et les matières grasses sont présentes en une quantité allant jusqu'à 25 % en poids.
